# EUROPEAN PATENT SPECIFICATION

(11) **EP 0 704 793 B1**
(45) Date of publication and mention of the grant of the patent: **08.05.2002**
(21) Application number: 95306861.6
(22) Date of filing: 28.09.1995
(51) Int. Cl.: G06F 7/02, G06F 7/48, G06F 7/50

(54) **Method and circuit to compare the sum of two numbers to a third number**
Verfahren und Schaltungsanordnung zum Vergleichen der Summe zweier Zahlen mit einer dritten Zahl
Méthode dispositif pour comparer la somme de deux nombres à un tiers nombre

(30) Priority: 29.09.1994 GB 9419614
(43) Date of publication of application: 03.04.1996
(73) Proprietor: TEXAS INSTRUMENTS INCORPORATED, Dallas Texas 75265 (US); TEXAS INSTRUMENTS LIMITED, Sunbury-on-Thames, Middlesex TW16 7AH (GB)
(72) Inventor: Simpson, Richard, Carlton, Bedford MK43 7JU (GB)
(74) Representative: Blanco White, Henry Nicholas

(56) References cited:
- EP-A- 0 191 452
- EP-A- 0 328 871
- US-A- 3 210 529
- US-A- 4 935 719

## Description

This invention relates to improvements in comparator schemes, as carried out in the Arithmetic Logic Unit (ALU) of a microprocessor.

A typical microprocessor includes the following functional blocks. A central Processing Unit (CPU) which comprises circuitry required to access the appropriate locations in memory and interpret resulting instructions. The execution of the instructions take place in the CPU. The CPU contains the Arithmetic Logic Unit (ALU), a control section, various registers etc.. The exact content of the CPU will obviously vary depending on the application of the microprocessor. The ALU is a combinational network that performs arithmetic and logical operations on data. Typical operations which are carried out include adding, subtracting, multiplying, dividing and comparing operations.

In operation, the speed of the processor is dependent on the speed of operation of any of the individual blocks within the processor. In addition there is constant effort being undertaken to make the components of the processor both smaller and less speed critical.

Certain methods have been proposed to determine whether the sum of two numbers will be equal to a third. One such method is disclosed in our European patent application No 0 679 989 (TIL-17549 GB). In this method the sum of two or more variables is compared with a predetermined constant value. A test is carried out which confirms that the sum is either equal to or not equal to the constant value.

One problem with this method is that if the test confirms that the sum is not equal to the constant there is no way of knowing which is larger than the other. There are methods which determine the larger of two numbers but this obviously causes a delay and requires more hardware.

European Patent Application No. 0 328 871 discloses a method of determining whether the sum of two numbers is equal to zero and, if not, which of the two numbers is the larger by performing a digit by digit comparison of the two numbers.

One object of the present invention is to provide a method which tests whether the sum of two variables is equal to, greater than or smaller than a third variable with one simple test.

The invention provides a method of operation of a comparator capable of comparing the sum of two binary variables A and B with a third binary variable V, including the steps of:
deriving a set of values Cinr where Cinr[n] = V[n] xor P[n], where V[n] is the nth digit of the third variable V and P[n] is a value P[n] = A[n] xor B[n], A[n] and B[n] being the digits of A and B at the position **n** and xor being the eXclusive OR logic function,
deriving a set of values ZH, where
   ZH[n] = Z[n] if V[n] = 0 and V[n-1] = 0,
   ZH[n] = ∼H[n] if V[n] = 0 and V[n-1] = 1,
   ZH[n] = ∼Z[n] if V[n] = 1 and V[n-1] = 0,
   ZH[n] = H[n] if V[n] = 1 and V[n-1] = 1, where
   "∼" indicates the complement of a value,
   H[n] = P[n] xor G[n-1] and Z[n] = P[n] xor K[n-1] according to the following:
   G[n-1] is 1 only if the digits A[n-1] and B[n-1] at the position n-1 in the variables A and B are both 1,
   K[n-1] is 1 only if the digits A[n-1] and B[n-1] at the position n-1 in the variables A and B are both 0 and
determining the result of the comparison by selecting the value of Cinr which corresponds to the most significant 0 of the value of ZH, one value of the selected Cinr indicating whether or not A+B<V.

Preferably, the step of determining the result of the comparison includes:
combining adjacent pairs of Cinr and ZH (Cinr[n], ZH[n], Cinr[n-1], ZH[n-1]) and reducing each pair to a single Cinr[out] and ZH[out] in accordance with:
   if ZH[n] is 0, then Cinr[n] becomes Cinr[out] and ZH[out] is 0 and,
   if ZH[n] is 1 and ZH[n-1] is 0, then Cinr[n-1] becomes C[out] and ZH[out] is 0,
   if both ZH[n] and ZH[n-1] are 1, C[out] having a "don't care" condition, this being indicated by ZH[out] being 1,
      combining adjacent pairs of Cinr[out] and ZH[out] and so reduced and reducing the adjacent values to a succeeding set in accordance with the above rules and
      continuing the combine-and-reduce steps until a single Cinr and ZH pair is obtained.

Preferably, the method includes the step of providing an output indicating that A+B=V when all of the values of ZH are 1.

The invention also provides a comparator capable of indicating whether A+B<V, where A, B and V are binary variables including:
means for deriving a set of values Cinr where Cinr[n] = V[n] xor P[n], where V[n] is the nth digit of the third variable V and P[n] is a value P[n] = A[n] xor B[n], A[n] and B[n] being the digits of A and b at the position **n** and xor being the eXclusive OR logic function,
means for deriving a set of values ZH, where
   ZH[n] = Z[n] if V[n] = 0 and V[n-1] = 0,
   ZH[n] = ∼H[n] if V[n] = 0 and V[n-1] = 1,
   ZH[n] = ∼Z[n] if V[n] = 1 and V[n-1] = 0,
   ZH[n] = H[n] if V[n] = 1 and V[n-1] = 1, where
   "∼" indicates the complement of a value,
   H[n] = P[n] xor G[n-1] and Z[n] = P[n] xor K[n-1] according to the following:
   G[n-1] is 1 only if the digits A[n-1] and B[n-1] at the position n-1 in the variables A and B are both 1,
   K[n-1] is 1 only if the digits A[n-1] and B[n-1] at the position n-1 in the variables A and B are both 0 and
means for determining the result of the comparison by selecting the value of Cinr which corresponds to the most significant 0 of the value of ZH, one value of the selected Cinr indicating whether or not A+B<V.

Preferably, the means for determining the result of the comparison includes:
a first set of means for receiving and combining adjacent pairs of Cinr and ZH (Cinr[n], ZH[n], Cinr[n-1], ZH[n-1]) and reducing each pair to a single Cinr[out] and ZH[out] in accordance with:
   if ZH[n] is 0, then Cinr[n] becomes Cinr[out] and ZH[out] is 0, and,
   if ZH[n] is 1 and ZH[n-1] is 0, then Cinr[n-1] becomes C[out] and ZH[out] is 0,
   if both ZH[n] and ZH[n-1] are 1, C[out] having a "don't care" condition, this being indicated by ZH[out] being 1,
a second set of means for receiving and combining adjacent pairs of Cinr and ZH connected to receive Cinr[out] and ZH[out] for reducing the adjacent values to a succeeding set in accordance with the above rules and
as many further sets of means connected to receive Cinr and ZH values from the previous means for continuing the combine-and-reduce steps as required to obtain a single Cinr and ZH.

Preferably, each of said means for selecting the value of Cinr which corresponds to the most significant 0 of the value of ZH includes a multiplexer and an AND gate, the multiplexer being connected to receive Cinr[n] and Cinr[n-1] as inputs and ZH[n] as a control signal and the AND gate being connected to receive ZH[n] and ZH[n-1] as inputs.

Preferably, the comparator includes means capable of providing an output indicating that A+B=V when all of the values of ZH are 1.

Preferably, the means for deriving a ZH value includes a multiplexer which, in operation, provides the ZH value at an output terminal, a first exclusive-nor gate connected to receive V[n] and Z[n] as input values and connected to supply its output signal to a first input terminal of the multiplexer, a second exclusive-nor gate connected to receive ∼V[n] and H[n] as input values and connected to supply its output signal to a second input terminal of the multiplexer, a control terminal of the multiplexer being connected to receive V[n-1].

Advantageously, an arithmetic and logic unit (ALU) includes a comparator in accordance with the invention.

This has the advantage that it is possible to determine whether the sum is equal to, greater than or smaller than the third variable.

Reference will now be made, by way of example, to the accompanying drawings, in which:
Figure 1 is a diagram of one part of the circuit of the invention,
Figure 2 is a diagram of the structure position of a magnitude comparator according to the present invention; and
Figure 3 is a diagram of the functions included in each block of the Figure 2 structure.

The invention is concerned with identifying the value of the sum of A and B relative to a predetermined value V.

The first part of the new circuit is based on the method for performing an A+B=V test. This relies on comparing the possible carry values with those required to produce the correct target result. It checks if there are any occurrences where the carry path cannot have the value required to produce the sum. If there are no occurrences then A+B equals V. If there are occurrences, then A+B does not equal V. The following is one method by which the method operates.

The INPUTS to the carry ripple portion of an adder at any bit position [n] can be represented using three MUTUALLY EXCLUSIVE variables, namely:-

| | | |
|---|---|---|
| P[n] Propagate, | Cout=Cin | When adding 1+0, or 0+1; |
| G[n] Generate, | Cout=1 | When adding 1+1; and |
| K[n] Kill, | Cout=0 | When adding 0+0. |

Consider the following simple sum.

Sum[n]=P[n] xor Cout[n-1].

If P[n-1] is false, then Cout[n-1] is known and so Sum[n] can be determined with certainty. If P[n-1] is true, then Cout[n-1] is not known and so Sum[n] is not known. But, if P[n] is also true then Sum[n] will be the same as Sum[n-1]. Or, if P[n] is false then Sum[n] will be the opposite to Sum[n-1].

From this it can be seen that examination of P[n,n-1], G[n,n-1] and K[n,n-1] will lead to four possible conditions:-
1 Sum[n]=O;
2 Sum[n]=l;
3 Sum[n]=Sum[n-1]; and
4 Sum[n]=∼Sum[n-1].

From this information it is possible to make further assumptions. If P[n-l]=0 for a certain Sum[n]=O, then:-
P[n]=l and G[n-1]=1; and/or
P[n]=0 and K[n-1]=1.

Similarly if P[n-1]=0 for a certain Sum[n]=l, then:-
P[n]=0 and G[n-l]=1; and/or
P[n]=l and K[n-1]=1.

It further follows that if P[n-l]=l for Sum[n]=Sum[n-1] then P[n]=l and for Sum[n]=∼Sum[n-1] then P[n]=0

As can be seen, EITHER the Sum is known, OR the relationship to the previous bit is known. If the full result of the ADD is known, all that is required to test if the answer is the required value, is for each bit to say if it is correct, (i.e. invert if testing for zero, pass if testing for 1), and put these into a wide fast parallel AND gate.

This method does not wait on the SUM at each bit to be available, but considers overlapping pairs. The TEST at each bit is a double test, EITHER Sum[n] is known, and it is correct, OR IF Sum[n] is not known, its relationship to Sum[n-1] must be correct. If the double test PASSES at EVERY bit position the answer WILL be the required result. If this double test FAILS at ANY bit position the result WILL NOT be the required result.

### The tests are as follows:-

If the target result is 00 i.e., we want to know if Sum[n]=O and Sum [n-l]=0 then EITHER Sum[n]=O, OR Sum[n]=Sum[n-1] which yields the following:-

| | |
|---|---|
| P[n]=l and G[n-l]=l | Sum[n]=O; |
| P[n]=O and K[n-l]=l | Sum[n]=O; and |
| P[n]=l and P[n-l]=l | Sum[n]=Sum[n-1]. |

This can be simplified to be P[n] xor K[n-1].

If the target result is 01 i.e., we want to know if Sum[n]=O and Sum[n-l]=1 then EITHER Sum[n]=O, OR Sum[n]=∼Sum[n-1] which yields the following:-

| | |
|---|---|
| P[n]=l and G[n-l]=l | Sum[n]=O; |
| P[n]=O and K[n-l]=l | Sum[n]=O; and |
| P[n]=O and P[n-l]=l | Sum[n]=∼Sum[n-1]. |

This can be simplified to be P[n] xor ∼G[n-1].

If the target result is 10 i.e., we want to know if Sum[n]=l and Sum [n-l]=0 then EITHER Sum[n]=l, OR Sum[n]=∼Sum[n-1] which yields the following:-

| | |
|---|---|
| P[n]=O and G[n-l]=l | Sum[n]=l; |
| P[n]=l and K[n-l]=l | Sum[n]=l; |
| P[n]=0 and P[n-l]=l | Sum[n]=∼Sum[n-1]. |

This can be simplified to be P[n] xor ∼K[n-1].

If the target result is 11 i.e., we want to know if Sum[n]=l and Sum[n-l]=1 then EITHER Sum[n]=l, OR Sum[n]=Sum[n-1] which yields the following:-

| | |
|---|---|
| P[n]=O and G[n-l]=l | Sum[n]=1; |
| P[n]=l and K[n-l]=l | Sum[n]=1; and |
| P[n]=l and P[n-l]=l | Sum[n]=Sum[n-1]. |

This can be simplified to be P[n] xor G[n- 1].

If we create two new variables, i.e.:-
P[n] xor K[n-l]=Z[n]; and
P[n] xor G[n-l]=H[n], then the 00 test is Z[n], the 01 test is ∼H[n], the 10 test is ∼Z[n] and the 11 test is H[n]. The test for bit zero is slightly different. Here it is necessary to test for a 1 with P[0] xor cin; and test for a 0 with
   P[0] xor ∼cin. (i.e. evaluate it). The table below illustrates this.

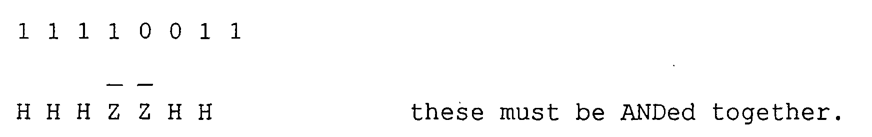

One way of implementing all this is to build 2 extra xor gates per ALU bit, and create the Z[n] and H[n] terms. These are then used, as appropriate, as inputs to a wide AND gate to detect any required value. This is very simple for a constant, for example C.

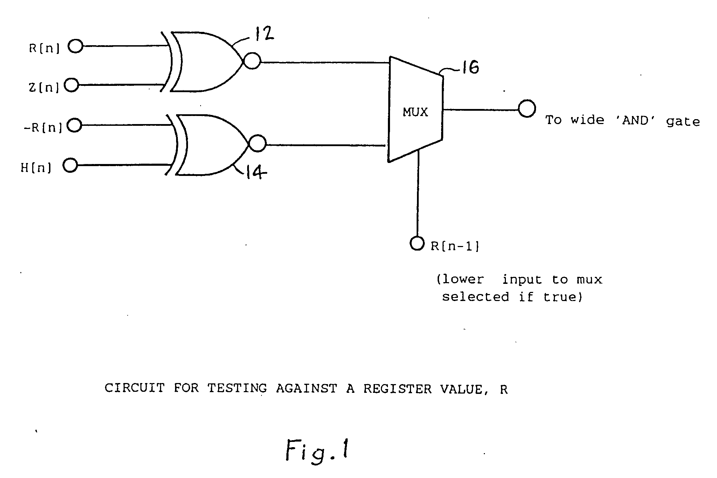

To compare against a register value, R, the circuit of figure 1 may be used. This circuit uses eight more transistors than the XOR gate that is required if the Sum is used, but these gates are now not speed critical, and so could be substantially smaller than would previously have been the case. As can be seen from the figure a circuit to carry out the invention may comprise two XNOR gates 12, 14 and a MUX 16. Outputs of the XNOR gates are passed to the MUX and the register value R[n-1] determines which to pass to the AND gate. Obviously this is just one means by which the function of this invention can be achieved. As will be apparent to the man skilled in the art other Boolean architectures can be chosen which have the same result.

The second part of the new circuit takes these results a stage further by indicating what the effect of the incorrect carry value will be. This is achieved by comparing the required 'carry in" at every bit position to produce the target result with the actual carry in. If the carry required to produce the target value is a 1, but the actual carry is a 0 the result will be less than the target value. If the required carry is a 0, but the actual carry is a 1, the result will be more than the target value.

Within an addition it is quite possible for there to be many places where the required carry and the actual carry differ. It is necessary to use the difference with the most significant bit (MSB) position to determine the result of the A+B>=V test. This is where the conventional (A>=B) magnitude comparator is used. A simple two operand magnitude comparator finds the most significant bit position where the two operands are different and this is used to say if A>B or B>A. (If, at this position, A[n]= 1 and B[n]=O then A>B, or, ir A[n]=O and B[n]=l then B>A.

The required carry in (Cinr[n]) is easy to determine. The result at any position is Sum[n] = P[n] xor Cin[n], where Cina[n] is the actual carry in. From this, it can be seen that the required carry in Cinr[n] = P[n] xor V[n] .

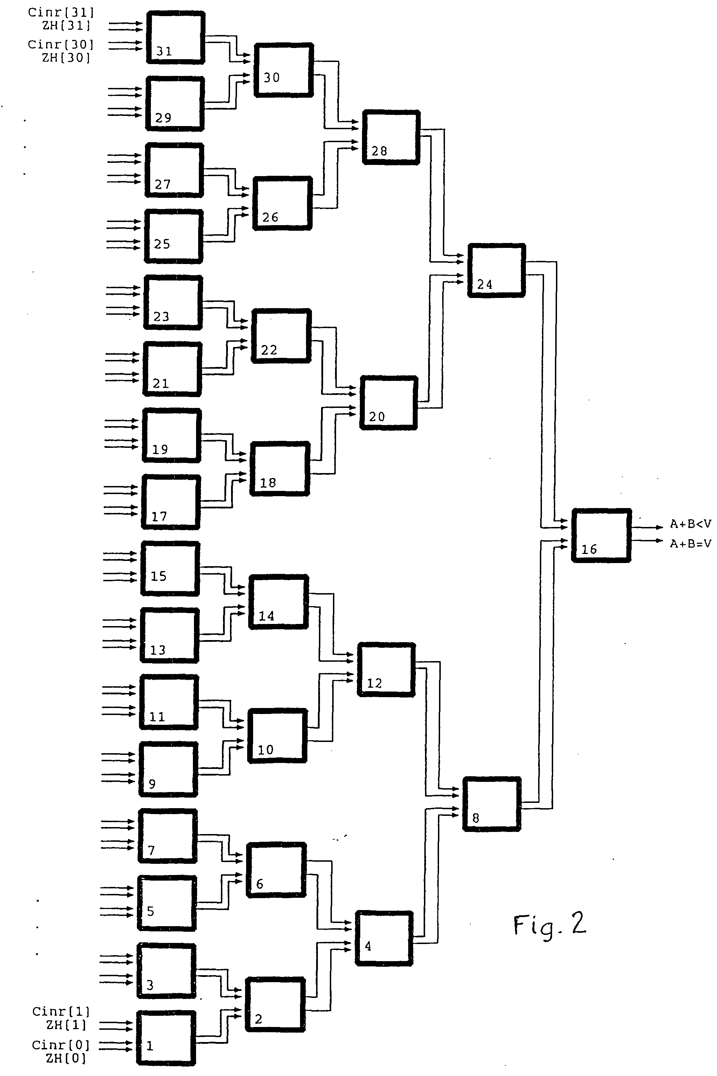

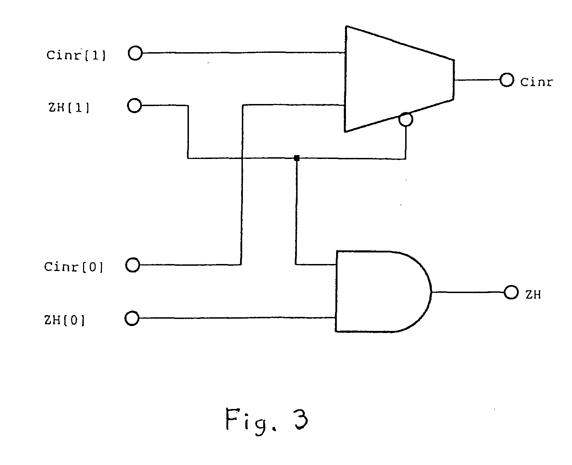

Referring to Figure 2, in this case the comparator will transfer the value of the required carry in (Cinr[n] at the most significant bit position where the ZH values indicate the carry path will not produce the required target value V. Figure 3 shows the detail of each block.

If ZH[n] = 0, then the corresponding Cinr[n] is irrelevant. Only if ZH[n] = 1 is Cinr[n] relevant, and then the value of Cinr which corresponds to the most significant zero of ZH[n] is the one that determines the result.

The method shown in Figures 2 and 3 is a way of transferring to the output value of Cinr[n] which corresponds to the most significant zero of ZH[n].

For example:

| | | | | | | | | |
|---|---|---|---|---|---|---|---|---|
| n | 7 | 6 | 5 | 4 | 3 | 2 | 1 | 0 |
| Cinr | 0 | 1 | 0 | 0 | 1 | 0 | 1 | 0 |
| ZH | 1 | 1 | 0 | 1 | 0 | 1 | 0 | 1 |
| * In this case ZH[5] is the most significant zero and so Cinr[5](0) must be transferred to the output | | | | | | | | |

For example:

| | | | | | | | | |
|---|---|---|---|---|---|---|---|---|
| n | 7 | 6 | 5 | 4 | 3 | 2 | 1 | 0 |
| Cinr | 0 | 1 | 0 | 0 | 1 | 0 | 1 | 0 |
| ZH | 1 | 1 | 1 | 1 | 0 | 1 | 0 | 1 |
| * In this case ZH[3] is the most significant zero and so Cinr[3](1) must be transferred to the output | | | | | | | | |

Figure 3 shows the basic building block for this.

2 adjacent input values of Cinr and ZH are combined and reduced to a single set of Cinr(out) and ZH(out) in the following manner. If both ZH inputs are 1, then both Cinr[0] and Cinr[l] are irrelevant and this is indicated by ZH(out) also being a l. (The AND gates does this).
If ZH[1] = 0 then Cinr[l] is the value which determines Cinr(out) and so it is transferred to the output. If ZH[1] = 1 then Cinr[0] will be transferred to the output. (The MUX does this).

This can be summarized as follows:

| ZH[1] | ZH[0] | ZH[out] | transfer |
|---|---|---|---|
| 0 | 0 | 0 | Cinr[1] |
| 0 | 1 | 0 | Cinr[1] |
| 1 | 0 | 0 | Cinr[0] |
| 1 | 1 | 1 | Cinr[0] |

The last case where ZH[1] = ZH[0] = 1, the transfer out is actually a 'don't care'.

Figure 2 shows how the basic building block is recursively combined in order to keep reducing the number of terms until eventually there is only a single ZH (the AND of all input ZH's) and a single Cinr which has come from the most significant ZH[n]=O, if there is one.

The Z and H values are used to determine if the sum A+B will be equal to V. If they are not, the value of the required carry-in at the left most failing position determines which is the larger, A+B or V.

The advantages are that this circuit is significantly faster than performing the addition and then passing the result to a magnitude comparator. The number of transistor per bit required for this circuit is constant, and the delay increases only logarithmically.

### Example 1

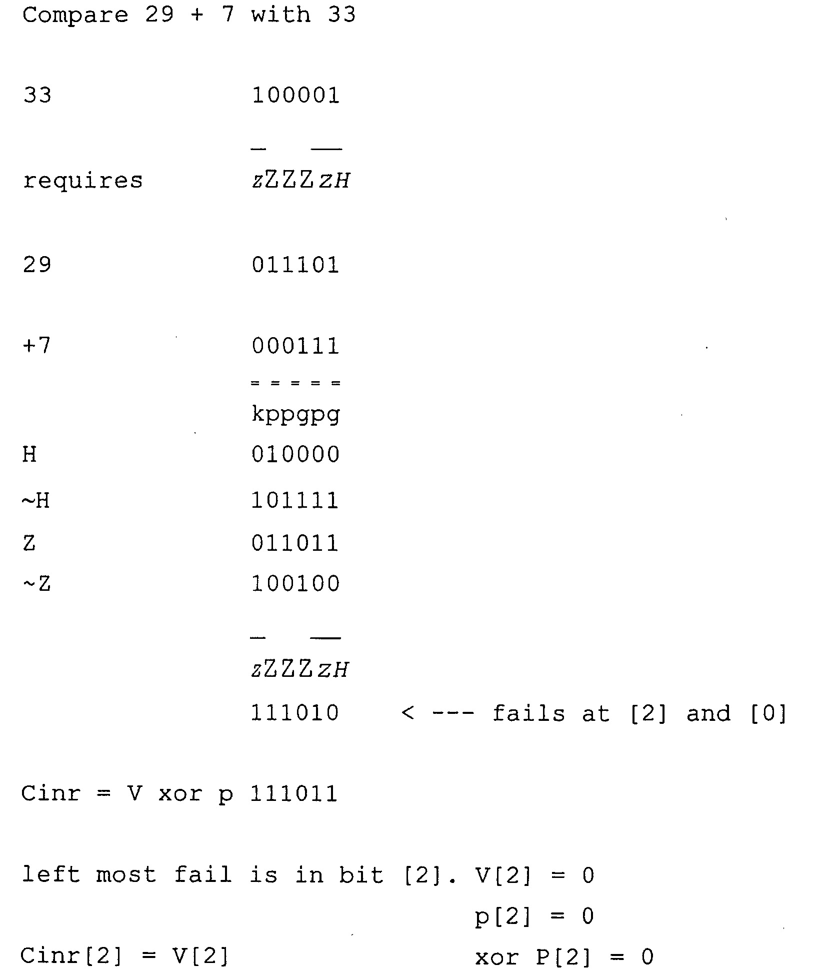

required carry in is 0, therefore A+B >V

### Example 2

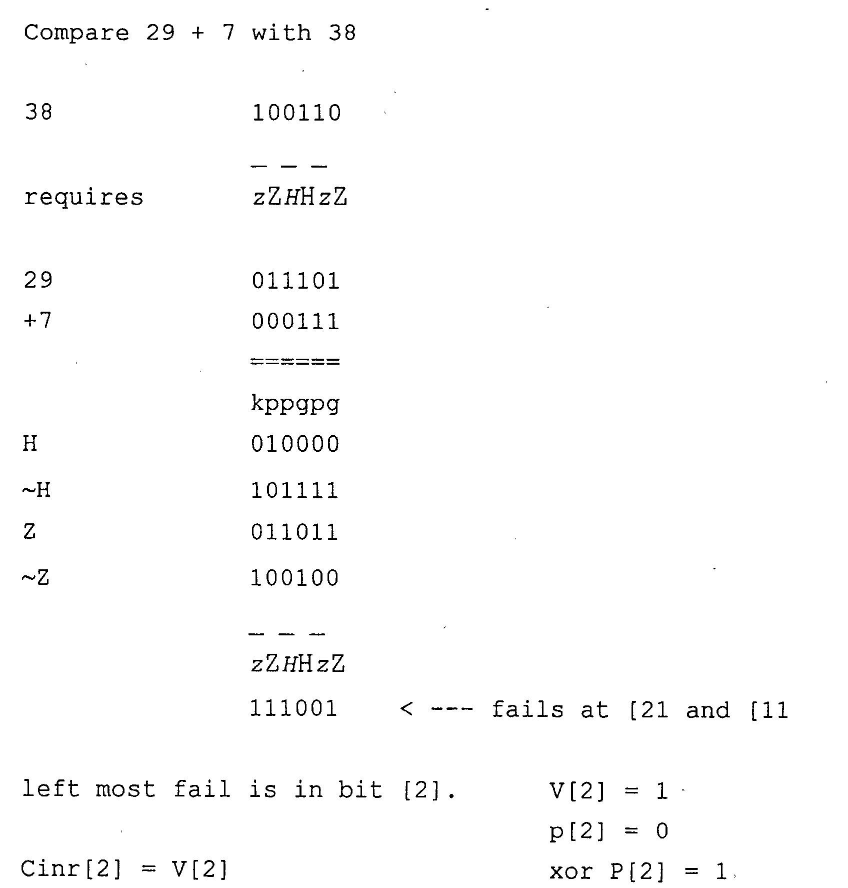

required carry in is 1, therefore A+B < V

## Claims

1. A method of operation of a comparator capable of comparing the sum of two binary variables A and B with a third binary variable V, including the steps of:
deriving a set of values Cinr where Cinr[n] = V[n] xor P[n], where V[n] is the nth digit of the third variable V and P[n] is a value P[n] = A[n] xor B[n], A[n] and B[n] being the digits of A and B at the position **n** and xor being the eXclusive OR logic function,
deriving a set of values ZH, where
ZH[n] = Z[n] if V[n] = 0 and V[n-1] = 0,
ZH[n] = ∼H[n] if V[n] = 0 and V [n-1] = 1,
ZH[n] = ∼Z[n] if V[n] = 1 and V[n-1] = 0,
ZH[n] = H[n] if V[n] = 1 and V[n-1] = 1, where
"∼" indicates the complement of a value,
H[n] = P[n] xor G[n-1] and Z[n] = P[n] xor K[n-1] according to the following:
G[n-1] is 1 only if the digits A[n-1] and B[n-1] at the position n-1 in the variables A and
B are both 1,
K[n-1] is 1 only if the digits A[n-1] and B[n-1] at the position n-1 in the variables A and
B are both 0 and
determining the result of the comparison by selecting the value of Cinr which corresponds to the most significant 0 of the value of ZH, one value of the selected Cinr indicating whether or not A+B<V.

2. A method as claimed in claim 1, wherein the step of determining the result of the comparison includes:
combining adjacent pairs of Cinr and ZH (Cinr[n], ZH[n], Cinr[n-1], ZH[n-1]) and reducing each pair to a single Cinr[out] and ZH[out] in accordance with:
if ZH[n] is 0 , then Cinr[n] becomes Cinr[out] and ZH[out] is 0 and,
if ZH[n] is 1 and ZH[n-1] is 0, then Cinr[n-1] becomes C[out] and ZH[out] is 0,
if both ZH[n] and ZH[n-1] are 1, C[out] having a "don't care" condition, this being indicated by ZH[out] being 1,
combining adjacent pairs of Cinr[out] and ZH[out] and so reduced and reducing the adjacent values to a succeeding set in accordance with the above rules and
continuing the combine-and-reduce steps until a single Cinr and ZH pair is obtained.

3. A method as claimed in claim 1 or claim 2, including the step of providing an output indicating that A+B=V when all of the values of ZH are 1.

4. A comparator capable of indicating whether A+B<V, where A, B and V are binary variables including:
means for deriving a set of values Cinr where Cinr[n] = V[n] xor P[n], where V[n] is the nth digit of the third variable V and P[n] is a value P[n] = A[n] xor B[n], A[n] and B[n] being the digits of A and b at the position **n** and xor being the eXclusive OR logic function,
means (12, 14, 16) for deriving a set of values ZH, where
ZH[n] = Z[n] if V[n] = 0 and V[n-1] = 0,
ZH[n] = ∼H[n] if V[n] = 0 and V[n-1] = 1,
ZH[n] = ∼Z[n] if V[n] = 1 and V[n-1] = 0,
ZH[n] = H[n] if V[n] = 1 and V[n-1] = 1, where
"∼" indicates the complement of a value,
H[n] = P[n] xor G[n-1] and Z[n] = P[n] xor K[n-1] according to the following:
G[n-1] is 1 only if the digits A[n-1] and B[n-1] at the position n-1 in the variables A and
B are both 1,
K[n-1] is 1 only if the digits A[n-1] and B[n-1] at the position n-1 in the variables A and B are both 0 and
means for determining the result of the comparison by selecting the value of Cinr which corresponds to the most significant 0 of the value of ZH, one value of the selected Cinr indicating whether or not A+B<V.

5. A comparator as claimed in claim 4, wherein the means for determining the result of the comparison includes:
a first set of means (1, 3, 5...31) for receiving and combining adjacent pairs of Cinr and ZH (Cinr[n], ZH[n], Cinr[n-1], ZH[n-1]) and reducing each pair to a single Cinr[out] and ZH[out] in accordance with:
if ZH[n] is 0, then Cinr[n] becomes Cinr[out] and ZH[out] is 0, and,
if ZH[n] is 1 and ZH[n-1] is 0, then Cinr[n-1] becomes C[out] and ZH[out] is 0,
if both ZH[n] and ZH[n-1] are 1, C[out] having a "don't care" condition, this being indicated by ZH[out] being 1,
a second set of means (2, 6, 10... 30) for receiving and combining adjacent pairs of Cinr and ZH connected to receive Cinr[out] and ZH[out] for reducing the adjacent values to a succeeding set in accordance with the above rules and
as many further sets of means (8, 16, 24) connected to receive Cinr and ZH values from the previous means for continuing the combine-and-reduce steps as required to obtain a single Cinr and ZH.

6. A comparator as claimed in claim 4 or claim 5, wherein each of said means for selecting the value of Cinr which corresponds to the most significant 0 of the value of ZH includes a multiplexer and an AND gate, the multiplexer being connected to receive Cinr[n] and Cinr[n-1] as inputs and ZH[n] as a control signal and the AND gate being connected to receive ZH[n] and ZH[n-1] as inputs.

7. A comparator as claimed in any one of claims 4 to 6, including means capable of providing an output indicating that A+B=V when all of the values of ZH are 1.

8. A comparator as claimed in any one of claims 4 to 7, wherein the means for deriving a ZH value includes a multiplexer which, in operation, provides the ZH value at an output terminal, a first exclusive-nor gate connected to receive V[n] and Z[n] as input values and connected to supply its output signal to a first input terminal of the multiplexer, a second exclusive-nor gate connected to receive ∼V[n] and H[n] as input values and connected to supply its output signal to a second input terminal of the multiplexer, a control terminal of the multiplexer being connected to receive V[n-1].

9. An arithmetic and logic unit (ALU) including a comparator as claimed in any one of claims 4 to 8.

## Patentansprüche

1. Verfahren zum Betreiben eines Komparators, der die Summe aus zwei binären Variablen A und B mit einer dritten binären Variable V vergleichen kann, das die Schritte umfaßt, in denen:
eine Menge von Werten Cinr abgeleitet wird, wobei Cinr[n] = V[n] xor P[n], wobei V[n] die n-te Ziffer der dritten Variable V ist und P[n] ein Wert P[n]=A[n] xor P[n] ist, wobei A[n] und B[n] die Ziffern von A und B an der Position n sind und wobei xor die EXKLUSIV-ODER-Logikfunktion ist,
eine Menge von Werten ZH abgeleitet wird, wobei
ZH[n] = Z[n], falls V[n]=0 und V[n-1]=0
ZH[n]=∼H[n], falls V[n]=0 und V[n-1]=1,
ZH[n]=∼Z[n], falls V[n] = 1 und V[n-1]=0,
ZH[n]=H[n], falls V[n]=1 und V[n - 1]=1, wobei
"∼" das Komplement eines Wertes angibt,
H[n] = P[n] xor G[n - 1] und Z[n] = P[n] xor K[n-1] gemäß dem folgenden:
G[n - 1] ist 1 nur dann, wenn beide Ziffern A[n - 1] und B[n- 1] an der Position n -1 in den Variablen A und B gleich 1 sind,
K[n-1] ist 1 nur dann, wenn beide Ziffern A[n-1] und B[n-1] an der Position n - 1 in den Variablen A und B gleich 0 sind, und
das Ergebnis des Vergleichs dadurch bestimmt wird, daß derjenige Wert von Cinr ausgewählt wird, der der höchstwertigen 0 des Wertes von ZH entspricht,
wobei ein Wert des ausgewählten Cinr angibt, ob A + B < V ist oder nicht.

2. Verfahren nach Anspruch 1, bei dem während des Schritts, bei dem das Vergleichsergebnis bestimmt wird:
benachbarte Paare von Cinr und ZH(Cinr[n], ZH[n], Cinr[n - 1], ZH[n - 1]) kombiniert werden und jedes Paar auf ein einzelnes Cinr[out] und ZH[out] in Übereinstimmung mit dem folgenden reduziert wird:
falls ZH[n] gleich 0 ist, dann wird Cinr[n] gleich Cinr[out] und ZH[out] ist 0 und
falls ZH[n] gleich 1 ist und ZH[n - 1] gleich 0 ist, dann wird Cinr[n - 1] gleich C[out] und ZH[out] ist 0,
falls sowohl ZH[n] als auch ZH[n-1] gleich 1 sind, hat C[out] einen "Gleichgültig"-Zustand, was durch ZH[out] gleich 1 angezeigt wird, und
benachbarte Paare von Cinr[out] und ZH[out], die auf diese Weise reduziert worden sind, kombiniert werden und benachbarte Werte auf eine nachfolgende Menge in Übereinstimmung mit den obigen Regeln reduziert werden und die Kombinations- und Reduzierungs-Schritte solange fortgesetzt werden, bis ein einzelnes Cinr- und ZH-Paar erhalten wird.

3. Verfahren nach Anspruch 1 oder Anspruch 2, das den Schritt umfaßt, bei dem eine Ausgabe geliefert wird, die angibt, daß A + B = V ist, wenn alle Werte von ZH gleich 1 sind.

4. Komparator, der angeben kann, ob A + B < V ist, wobei A, B und V binäre Variablen sind, mit:
Mitteln zum Ableiten einer Menge von Werten Cinr, wobei Cinr[n] = V[n] xor P[n], wobei V[n] die n-te Ziffer der dritten Variable V ist und P[n] ein Wert P[n] = A[n] xor B[n] ist, wobei A[n] und B[n] die Ziffern von A und B an der Position n sind und wobei xor die EXKLUSIV-ODER-Logikfunktion ist,
Mitteln (12, 14, 16) zum Ableiten einer Menge von Werten ZH, wobei
ZH[n] = Z[n], falls V[n] = 0 und V[n -1] = 0
ZH[n] = ∼H[n], falls V[n] = 0 und V[n - 1]=1,
ZH[n] = ~Z[n], falls V[n] = 1 und V[n -1] = 0,
ZH[n] = H[n], falls V[n] = 1 und V[n - 1] = 1, wobei
"∼" das Komplement eines Wertes angibt,
H[n] = P[n] xor G[n - 1] und Z[n] = P[n] xor K[n - 1] gemäß dem folgenden:
G[n-1] ist 1 nur dann, wenn beide Ziffern A[n-1] und B[n-1] an der Position n-1 in den Variablen A and B gleich 1 sind,
K[n-1] ist 1 nur dann, wenn beide Ziffern A[n-1] und B[n-1] an der Position n-1 in den Variablen A und B gleich 0 sind, und
Mitteln zum Bestimmen des Ergebnisses des Vergleichs, indem derjenige Wert von Cinr ausgewählt wird, der der höchstwertigen 0 des Wertes von ZH entspricht, wobei ein Wert des ausgewählten Cinr angibt, ob A + B < V ist oder nicht.

5. Komparator nach Anspruch 4, bei dem die Mittel zum Bestimmen des Vergleichsergebnisses umfassen:
eine erste Menge von Mitteln (1, 3, 5, ... 31) zum Empfangen und Kombinieren benachbarter Paare von Cinr und ZH(Cinr[n], ZH[n], Cinr[n-1], ZH[n-1]) und zum Reduzieren jedes Paars auf ein einzelnes Cinr[out] und ZH[out] in Übereinstimmung mit dem folgenden:
falls ZH[n] gleich 0 ist, dann wird Cinr[n] gleich Cinr[out] und ZH[out] ist 0 und
falls ZH[n] gleich 1 ist und ZH[n - 1] gleich 0 ist, dann wird Cinr[n-1] gleich C[out] und ZH[out] ist 0,
falls sowohl ZH[n] als auch ZH[n - 1] gleich 1 sind, hat C[out] einen "Gleichgültig"-Zustand, was durch ZH[out] gleich 1 angezeigt wird,
eine zweite Menge von Mitteln (2, 6, 10, ..., 30) zum Empfangen und Kombinieren benachbarter Paare von Cinr und ZH, die so verbunden sind, daß sie Cinr[out] und ZH[out] empfangen, um die benachbarten Werte auf eine nachfolgende Menge in Übereinstimmung mit den obigen Regeln zu reduzieren, und
so viele weitere Mengen von Mitteln (8, 16, 24), die so angeschlossen sind, daß sie Cinr- und ZH-Werte aus den vorhergehenden Mitteln empfangen, um die Kombinations- und -Reduzierungs-Schritte solange fortzusetzen, wie es erforderlich ist, um ein einzelnes Cinr und ZH zu erhalten.

6. Komparator nach Anspruch 4 oder 5, bei dem jedes der Mittel zum Auswählen des Wertes von Cinr, der der höchstwertigen 0 des Wertes von ZH entspricht, einen Multiplexer und ein UND-Gatter enthält, wobei der Multiplexer so angeschlossen ist, daß er als Eingänge Cinr[n] und Cinr[n-1] und als ein Steuersignal ZH[n] empfängt und wobei das UND-Gatter so angeschlossen ist, daß es als Eingänge ZH[n] und ZH[n - 1] empfängt.

7. Komparator nach einem der Ansprüche 4 bis 6, der Mittel umfaßt, die eine Ausgabe bereitstellen können, die angibt, daß A + B = V ist, wenn alls Werte von ZH gleich 1 sind.

8. Komparator nach einem der Ansprüche 4 bis 7, bei dem die Mittel zum Ableiten eines ZH-Wertes einen Multiplexer, der im Betrieb den ZH-Wert am Ausgangsanschluß bereitstellt, ein erstes EXKLUSIV-NOR-Gatter, das so angeschlossen ist, daß es V[n] und Z[n] als Eingangswerte empfängt, und so angeschlossen ist, daß es sein Ausgangssignal an einen ersten Eingangsanschluß des Multiplexers liefert, und ein zweites EXKLUSIV-NOR-Gatter, das so angeschlossen ist, daß es ∼V[n] und H[n] als Eingangswerte empfängt, und so angeschlossen ist, daß es sein Ausgangssignal an einen zweiten Ausgangsanschluß des Multiplexers liefert, umfassen, wobei ein Steueranschluß des Multiplexers so angeschlossen ist, daß er V[n-1] empfängt.

9. Arithmetik-Logik-Einheit (ALU), die einen Komparator nach einem der Ansprüche 4 bis 8 enthält.

## Revendications

1. Procédé de fonctionnement d'un comparateur capable de comparer la somme de deux variables binaires A et B avec une troisième variable binaire V, comprenant les étapes de :
dérivation d'un ensemble de valeurs Cinr où Cinr[n] = V[n] ⊕ P[n] où V[n] est le n-ième chiffre de la troisième variable V et P[n] est une valeur P[n] = A[n] ⊕ B[n], A[n] et B[n] étant les chiffres de A et de B à la position n et ⊕ étant la fonction logique « ou exlusif »,
dérivation d'un ensemble de valeurs ZH, où
ZH[n] = Z[n] si V[n] = 0 et V[n-1] = 0,
ZH[n] = ∼H[n] si V[n] = 0 et V[n-1] = 1,
ZH[n]=∼Z[n] si V[n] = 1 et V[n-1] = 0,
ZH[n] = H[n] si V[n] = 1 et V[n-1] = 1, où
«∼»indique le complémentaire d'une valeur,
H[n] = P[n] ⊕ G[n-1] et Z[n] = P[n] ⊕ K[n-1] selon ce qui suit:
G[n-1] est égal à 1 seulement si les chiffres A[n-1] et B[n-1] à la position n-1 dans les variables A et B sont tous les deux égaux à 1,
K[n-1] est égal à 1 seulement si les chiffres A[n-1] et B(n-1] à la position n-1 dans les variables A et B sont tous les deux égaux à 0 et
détermination du résultat de la comparaison en sélectionnant la valeur de Cinr qui correspond au 0 le plus significatif de la valeur de ZH, une valeur du Cinr sélectionné indlquant si oui ou non A + B < V.

2. Procédé selon la revendication 1, dans lequel l'étape de détermination du résultat de la comparaison inclut:
de combiner les paires adjacentes de Cinr et ZH (Cinr[n]. ZH[n], Cinr[n-1], ZH[n-1]) et de réduire à un seul Cinr[sortie] et ZH[sorite] selon ce qui suit:
si ZH[n] est égal à 0, alors Cinr[n] devient Cinr[sortie] et ZH[sortie] est égal à 0, et
si ZH[n] est égal à 1 et ZH[n-1] est égal à 0, alors Cinr[n-1] devient C[sortie] et ZH[sortie] est égal à 0,
si ZH[n] et ZH[n-1] sont tous les deux égaux à 1, C[sortie] ayant une condition « c'est égal » ou « ne pas tenir compte », ceci étant indiqué par ZH[sortie], est égal à 1,
combiner les paires adjacentes de Cinr[sortie] et ZH[sortie] ainsi réduites et réduire les valeurs adjacentes jusqu'à avoir un ensemble satisfaisant les règles précédentes et continuer les étapes de « combiner et réduire » jusqu'à ce qu'une paire unique de Clnr et ZH soit obtenue.

3. Procédé selon les revendications 1 ou 2, incluant l'étape de fournir une sortie indiquant que A+B=V quand toutes les valeurs de ZH sont égales à 1.

4. Comparateur capable d'indiquer si A+B<V, où A, B et V sont des variables binaires comprenant:
des moyens de dérivation d'un ensemble de valeurs Cinr où Clnr=V[n] ⊕ P[n], où V[n] est le n-ième chiffre de la troisième variable V et P[n] est une valeur P[n] = A[n] ⊕ B[n], A[n] et B[n] étant les chiffres de A et B à la position n et ⊕ étant la fonction logique « ou exclusif »,
des moyens (12,14,16) de dérivation d'un ensemble de valeurs ZH, où
ZH[n] = Z[n] si V[n] = 0 et V[n-1] = 0.
ZH[n] = ∼H[n] si V[n] = 0 et V[n-1] = 1,
ZH[n] =∼Z[n] si V[n] = 1 et V[n-1] = 0,
ZH[n] = H[n] si V[n] = 1 et V[n-1] = 1, où
«∼» indique le complémentaire d'une valeur,
H[n] = P[n] ⊕ G[n-1] et Z[n] = P[n] ⊕ K[n-1] selon ce qui suit :
G[n-1] est égal à 1 seulement si les chiffres A[n-1] et B[n-1] à la position n-1 dans les variables A et B sont tous les deux égaux à 1,
K[n-1] est égal à 1 seulement si les chiffres A[n-1] et B(n-1] à la position n-1 dans les variables A et B sont tous les deux égaux à 0 et
des moyens pour déterminer le résultat de la comparaison en sélectionnant la valeur de Cinr qui correspond au 0 le plus significatif de la valeur de ZH, uns valeur du Cinr sélectionné indiquant si oui ou non A + B < V.

5. Comparateur selon la revendication 4, dans lequel les moyens pour déterminer le résultat de la comparaison incluent :
un premier ensemble de moyens (1,3,5,.....31) pour recevoir et combiner des paires adjacentes de Cinr et ZH (Clnr[n], ZH[n], Cinr[n-1], ZH[n-1]) et de réduire chaque paire à un Cinr[sortie] et ZH[sortie] selon ce qui suit :
si ZH[n] est égal à 0, alors Cinr[n] devient Cinr[sortie] et ZH[sortie] est égal à 0, et
si ZH[n] est égal à 1 et ZH[n-1] est égal à 0, alors Cinr[n-1] devient C[sortie] et ZH[sortie] est égal à 0,
si ZH[n] et ZH[n-1] sont tous les deux égaux à 1, C[sortie] ayant une condition « c'est égal » ou « ne pas tenir compte », ceci étant indiqué par ZH[sortie], est égal à 1,
un second ensemble de moyens (2,6,10,....30) pour recevoir et combiner des paires adjacentes de Cinr et ZH connectées de façon à recevoir Cinr[sortie] et ZH[sortie] pour réduire les valeurs adjacentes à un ensemble répondant aux règles ci-dessus, et
autant d'ensembles de moyens supplémentaires (8,16,24), connectés pour recevoir les valeurs Cinr[sortie] et ZH[sortie] des précédents moyens pour continuer les étapes de « combinaison et réduction » qu'il faut pour obtenir un seul Cinr et ZH.

6. Comparateur selon les revendications 4 ou 5, dans lequel chacun desdits moyens, pour sélectionner la valeur de Cinr qui correspond au 0 le plus significatif de la valeur de ZH, incluent un multiplexeur et une porte « et », le multiplexeur étant connecté de manière à recevoir Cinr[n] et Cinr[n-1] comme entrées et ZH[n] comme signal de commande et la porte « et » étant connectée de manière à recevoir ZH[n] et ZH[n-1] comme entrées.

7. Comparateur selon l'une quelconque des revendications 4 à 6, comprenant des moyens capables de foumir urne sortie indiquant que A+B=V quand toutes les valeurs de ZH sont égales à 1.

8. Compamteur selon l'une quelconque des revendications 4 à 7, dans lequel les moyens de dérivation d'une valeur ZH incluent un multiplexeur qui, lorsqu'il est en fonctionnement, fournit la valeur ZH à une borne de sortie, une première porte « non ou exclusif » connectée pour recevoir V[n) et Z[n] comme valeurs d'entrée et connectiée pour fournir son signal de sortie à une première bome d'entrée du multiplexeur, une seconde porte « non ou exclusif » connectée pour recevoir ~V[n] et H[n] comme valeurs d'entrée et connectée pour fournir son signal de sortie à une seconde home d'entrée de multiplexeur, une home de commands du multiplexeur étant connectée pour recevoir V[n-1].

9. Unité arithmétique et logique (ALU) comprenant un comparateur selon l'une quelconque des revendications 4 à 8.
